Europäisches Patentamt

European Patent Office

Office européen des brevets

(11) Publication number: **0 204 667**
**B1**

(12) **EUROPEAN PATENT SPECIFICATION**

(45) Date of publication of patent specification: **17.05.89**

(21) Application number: **86830146.6**

(22) Date of filing: **29.05.86**

(51) Int. Cl.⁴: **F 16 K 11/00**

(54) **A mixer unit, particularly of the single lever type which can be fitted to conventional units with two boxed-in taps.**

(30) Priority: **29.05.85 IT 3010885 u**

(43) Date of publication of application:
**10.12.86 Bulletin 86/50**

(45) Publication of the grant of the patent:
**17.05.89 Bulletin 89/20**

(84) Designated Contracting States:
**AT BE CH DE FR GB LI NL SE**

(56) References cited:
**DE-A-2 042 818**
**FR-A-1 476 080**
**GB-A-2 067 715**
**US-A-2 878 489**

(73) Proprietor: **FRATELLI POLETTI S.n.c. di Poletti
Renato Constante e Carlo
Via Tencagnino, 134
I-28024 Gozzano (Novara) (IT)**

(72) Inventor: **Poletti, Renato
Costante e Carlo Via Tencognino, 134
I-28024 Gozzano (NO) (IT)**

(74) Representative: **Cicogna, Franco
Ufficio Internazionale Brevetti Dott.Prof. Franco
Cicogna Via Visconti di Modrone, 14/A
I-20122 Milano (IT)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

The present invention relates to a mixer unit, particularly of the single lever type, which can be fitted to conventional units having two boxed-in taps.

As is known, boxed-in units are currently utilised in baths, which have the tap for the cold water and the tap for the hot water boxed-in, which are joined by means of a boxed-in pipe within the wall to a distribution outlet which can be constituted by a pipe for the basin or, possibly, the shower unit or, in an alternative manner, by means of a deflecter, it is possible to have a selective connection either with the pipe or with the shower unit.

With such types of taps it is not currently possible to utilise single lever actuating units with ceramic discs so that, to provide for their replacement, it is currently necessary to undertake work on the walls for removal of the old taps in order to proceed to the installation of the new single control unit.

The removal of the boxed-in taps presents various difficulties the most serious of which is constituted by the fact that it is unavoidably necessary to break the tiles with serious difficulties of replacement in the event that tiles of the same type are not available.

Document GB—A—2067715 discloses a mixing forcet arrangement provided for converting a pair of already installed standard taps without disturbing the mounting or the connections to the bodies of the taps by an assembly which includes an annular washer providing sealings to the outlets of the existing taps and a mixing chamber having an input from each of the taps controlled by a respective valve and an outlet for the mixture. Flow from the mixing chamber may be selectively directed to either of two outlets by rotation of a further valve. This arrangement, on the other hand, cannot be applied to boxed-in units for transforming them into a simple forcet body.

Document FR—A—1476080 discloses improvements to mixer forcets in which the distance separating the axes of two forcet bodies can be adjusted by an extension associated with each forcet body and adapted to slide in a tubular sleeve including a fitting member for the forcet outlet. Also this arrangement, however, cannot be fitted for transforming boxed-in or recessed taps into a simple forcet.

Finally, document US—A—2878489 discloses an arrangement enabling a mixing forcet and spout to replace two forcets of a double forcet lavatory; however, also in this case the two forcets being replaced are not of the boxed-in type.

The object of the present invention is just that of eliminating the previously lamented disadvantages by providing a mixer unit of the single lever type which is structured in such a way that it can be replaced as a unit externally of conventional units having two boxed-in taps without having to proceed to any breakages for the neutralisation of the pre-existing boxed-in pipes.

Within the scope of the above explained object a particular object of the invention is that of providing a mixer unit of the single lever type which, as well as allowing the replacement of shower or bath units of old type, will be easily applicable to new installations without requiring special or difficult installation operations.

Another object of the present invention is that of providing a mixer unit which can be adapted to existing pitches, that is to say to the pre-existing distances between the seatings of the boxed-in taps, without requiring replacement of components and difficult operations.

The present mixer unit, of the single lever type, is easily obtainable starting from elements and materials which are commonly commercially available and, moreover, is advantageous from an economic point of view.

The above explained object, as well as the objects listed and others which will become better apparent hereinbelow, are achieved according to the invention by a mixer unit of the single lever type which can be fitted to conventional units having two boxed-in taps having the characteristics of the characterizing portion of claim 1.

Further characteristics and advantages of the subject of the present invention will become more clearly apparent through a study of the description of a preferred, but not exclusive, embodiment of a mixer unit, particularly of the single control type, illustrated by way of indicative, but non-limitative, example with the aid of the attached drawings, in which:

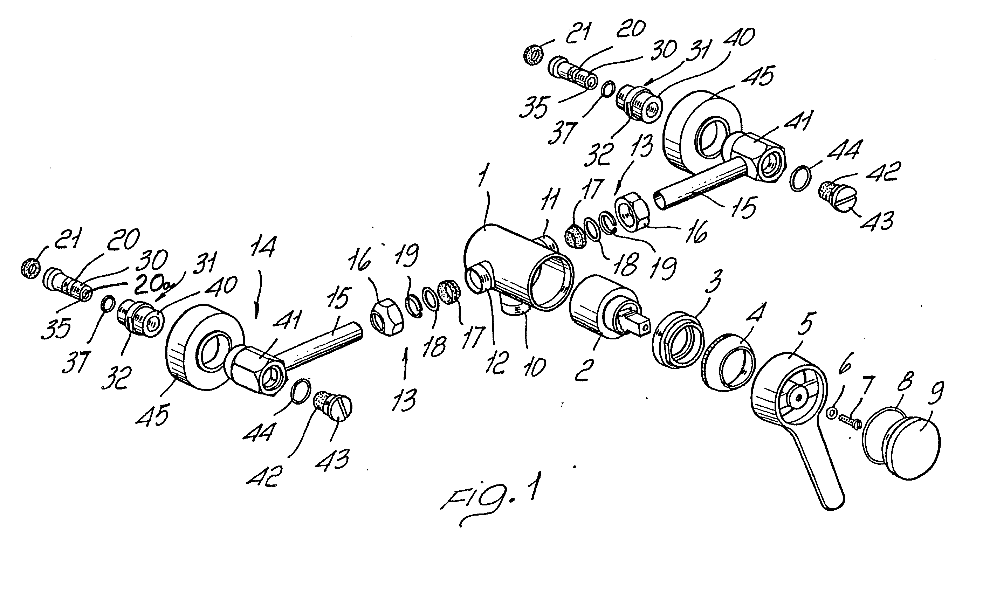

Figure 1 shows the mixer unit of single lever type in exploded perspective view;

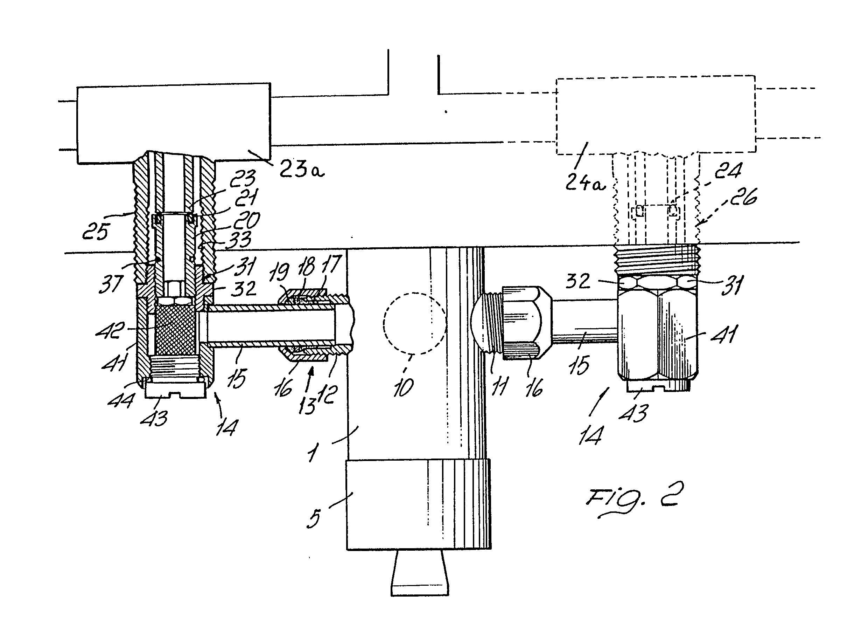

Figure 2 shows the mixer unit seen in section and fitted to a wall in substitution for a conventional boxed-in unit.

With particular reference to the said Figures, according to the invention the mixer unit of single lever type which can be fitted to conventional units having two boxed-in taps, comprises a control body generally indicated with the reference numeral 1 to the interior of which can be fitted a cartridge 2 of the ceramic disc type which is maintained in position by means of a ring nut for clamping the cartridge 3 on which can be fitted a control cap 4.

Externally, there is provided a control handle or lever 5 which is fixed to the cartridge 2 by means of a screw 7 with a washer 6. As usual, on the lever 5 there is fitted a cover or plate 9 fixed with the interposition of a seal 8.

The body 1 is provided with a connector 10 for the discharge of water and a connector 11 for the introduction of cold water and a connector 12 for the introduction of hot water.

The said central body 1 is connected, by means of telescopic connections generally indicated 13, to valved connectors generally indicated with the reference numeral 14, of which there are two, that is one for hot water and one for cold water.

These latter are identical to one another and therefore in the following description only one of the units will be described in detail, the other also being intended to be described thereby.

Each telescopic section 13 has a tubular section 15 connected to the connector 14 and is introduced telescopically into the corresponding connector opening 11 or 12 and sealingly fixed by means of a threaded cap 16 which is screwed onto the associated connector 11 or 12 and which effects clamping of a conical seal 17 which is disposed externally of the tubular section 15. The seal 17 is pressed by the screwing of the cap 16 by means of the interposition of a flat washer 18 and a conical locking split ring 19.

Each valved connector 14 is constituted by a valve element 20 which, at its end, supports a face seal 21 which acts sealingly on the hot water introduction opening 23 or on the cold water introduction opening 24 which are defined in the seatings of the pre-existing boxed-in taps, respectively indicated 25 and 26, for hot water and cold water.

The tubular element 20 has, on the side opposite the end supporting the front seal 21, a threaded section 30 which engages within a connectable body 31 having double external threading, provided in a central position with a gripping zone 32 engageable by a key to be screwed into the threaded seat 33 correspondingly defined by the pre-existing boxed-in taps 25 and 26.

Within the section having the threading 30 the valve element 20 defines a polygonal seat 35 which can engage with a corresponding polygonal key which allows the clamping of the tubular element to be effected in a manner such as to bring it into contact with the corresponding introduction openings 23 and 24.

There is, further, provided an annular seal 37 which acts on the outer surface of the tubular element 20 to effect a seal and to prevent infiltration into the previous communication ducts for the delivery of water indicated respectively 23a and 24a.

To the double threaded connection 31 and, more precisely, to the threading 40 which remains positioned externally, there is connectable a connector 41 from which the tubular section 15 extends radially.

The connector 41 is open axially to allow the introduction of a filtering element 42 which can be fitted by means of a plug element 43 with the interposition of a sealing 'O' ring 44.

Further, there is provided a covering cap 45 which is superimposed around the zone of the pre-existing boxed-in taps to create a good finish from the aesthetic point of view.

In practical use, to effect installation of the mixer unit according to the invention, it is sufficient to remove the valve screws, from the pre-existing boxed-in taps, obviously after having closed off the water, introducing into the threaded seats of the boxed-in taps the double threaded connector 31 which will have internally a pitch corresponding to the pre-existing threaded seating 33.

With the double threaded connector 31 there is associated the valve element 20 which is subsequently screwable, in such a way as to bring the front seal 21 to effect a perfect seal, in such a way that the inner duct 20a which is defined within the valve element 20 is in communication with the hot water and cold water introduction ducts in correspondence with the introduction openings indicated 23 and 24.

To the externally threaded section 40 of the double threaded connector 31 there is subsequently fitted the connectors 14 provided with tubular sections 15 which are connectable to the central body 1 with the possibility of adapting themselves to the pre-existing separation between the boxed-in taps thanks to the telescopic coupling described above.

In this way it is possible to use the pre-existing boxed-in tap seatings without having to perform work of any type on the walls to effect the connection to the pipes for the introduction of hot water and cold water to the body 1, which is provided with a single lever control cartridge with ceramic discs of modern type.

The positioning of the central body 1 is such as to cover the possible hole, which remains in correspondence with the pre-existing deflector unit, which is obviously removed, in that the valve element blocks the passage of water towards the pre-existing boxed-in pipes.

The central body 1 can be connected by its output connector to a simple delivery pipe for the basin or possibly to a shower, or possibly to a delivery pipe with a deflector for connection to the shower.

From what has been described hereinabove it will be seen how the invention achieves the proposed objects.

In particular, it is emphasised that a mixer unit of new type is provided, that is to say with ceramic discs and a single control, without having to perform any work which involves breaking the pre-existing old unit, but simply by effecting, by means of the valve element, a deflection of the water flow towards the outside, that is to say towards the body 1, which carries its own internal ceramic disc cartridge.

Another important aspect of the invention is constituted by the fact that the mixer unit according to the invention allows connection to pre-existing connectors in the case of boxed-in taps, and screens from view the possible hole remaining in correspondence with the old deflector unit.

**Claims**

1. A mixer unit, specifically designed for being fitted to conventional units having two boxed-in taps, comprising an external control body (1) connectable with telescopic sections (13) having valve connectors (14) which can be fitted to the seats (25 and 26) of pre-existing boxed-in taps, said control body (1) being provided with a connector (10) for the discharge of water, a connector opening (11) for the introduction of cold water and a connector opening (12) for the introduction of hot water, characterized in that said valve connectors (14) have a valve element (20) sealingly connectable to the openings (23 and 24) for the introduction of water to said seats (25 and 26) and define a communication duct with said telescopic sections (13), in that said telescopic sections (13) include tubular sections (15) connected to said valve connectors (14), and insertable into said connector openings (11 and 12) of said control body (1), there being further provided a cap (16) screw clampable onto said connector openings (11, 12) and acting on a conical seal (17) disposable externally at the end of said tubular section (15) with the interposition of a flat washer (18) and a conical locking ring (19), and in that a single lever actuating unit (2—9) is fitted to said control body (1).

2. A mixer unit according to the preceding claim, characterised in that said valve element (20) has, at its end, a face seal (21) acting on said water inlet openings (23 and 24) and, at its other end, a polygonal seat (35) engageable by a tool for clamping against said water introduction openings (23, 24).

3. A mixer unit according to one or more of the preceding Claims, characterised in that said valve element (20) has an externally threaded section (30) engageable in an internal threading defined by a double threaded connector (31) which can be fitted to said threaded seats (25, 26) of said pre-existing boxed-in taps.

4. A mixer unit according to one or more of the preceding Claims, characterised in that it includes a coupling (41) connectable to the double threaded externally threaded section of said double threaded connector (31), said tubular section (15) extending radially from said coupling (41).

5. A mixer unit according to one or more of the preceding Claims, characterised in that said coupling (41) is open axially for the introduction of a filtering element (42) maintained in position by a plug (43) with the interposition of a sealing 'O' ring (44).

## Patentansprüche

1. Mischbatterie, insbesondere Einhebelmischbatterie, die an die üblichen, mit zwei eingesenkten Hähnen ausgestatteten Batterien angepasst werden kann, die mit einem an teleskopischen Teilen (13) verbindbaren Aussenantriebskörper (1) vorgesehen sind, deren Teile Ventilverbindungen (14) aufweisen, die in den Sitzen (25 und 26) der voreingesenkten Hähnen eingerückt sein können, wobei das obengenannte Antriebskörper (1) mit einer Wasserabflußverbindungsmuffe (10), einer Kaltwassereinströmverbindungsöffnung (11) und einer Warmwassereinströmverbindungsöffnung (12) vorgesehen ist, dadurch gekennzeichnet, daß die obengenannte Ventilverbindung (14) mit einem versieglbar am Öffnungen (23 und 24) verbindbaren Ventilelement (20) für Wassereinström in den obengenannten Sitzen (25 und 26) vorgesehen sind und einen Verbindungskanal mit den obengenannten teleskopischen Teilen (13) bestimmen, daß die obengenannte teleskopische Teile (13) röhrförmige an den obengenannten Ventilverbindungen (14) verbindbare Teile (15) einschliessen, die in den obengenannten Verbindungsöffnungen (11 und 12) des obengenannten Antriebskörpers (1) einfügbar sind, wobei, ferner, ein auf den obengenannten Verbindungsöffnungen (11, 12) zugeschraubter Stopfen (16) vorgesehen ist, der auf einer mit der Ende der obengenannten röhrförmigen Teilen (15) aussen verbindbaren Dichtung (17) durch einschiebung einer Unterlegscheibe (18) und eines Sperringes (19) wirkt, und daß die obengenannte den Hebel antreibende Einheit (2—9) in dem obengenannte Antriebskörper (1) eingeschaltet ist.

2. Mischbatterie nach vorhergehendem Anspruch, dadurch gekennzeichnet, daß das obengenannte Ventilelement (20) am seiner Ende eine auf den obengenannten Wassereinströmöffnungen (23 und 24) wirkende Stirndichtung (21) und am seiner anderen Ende ein mehrkantiger von einem Werkzeug um so gegen den obengenannten Wasserströmöffnungen (23, 24) sich zu klemmen klinkbarer Sitz (35) aufweist.

3. Mischbatterie nach einer oder mehreren vorhergehenden Ansprüchen, dadurch gekennzeichnet, daß das obengenannte Ventilelement (20) eine aussengewindete Teile (30) aufweist, die in einem inneren von einer zweigängig gewindeten Verbindung (31) bestimmten Gewinde klinkbar ist, wobei die gewindete Verbindung (31) in den obengenannten gewindeten Sitzen (25, 26) der obengenannten vorherbestehenden eingesenkten Hähnen eingeschaltet sein kann.

4. Mischbatterie nach einer oder mehreren vorhergehenden Ansprüchen, dadurch gekennzeichnet, daß sie eine mit der zweigängig gewindeten Aussenteile der obengenannten zweigängig gewindeten Verbindung (31) verbindbare Kupplung (41) einschließt, wobei die obengenannten röhrförmigen Teile (15) radial von der obengenannten Kupplung (41) erstreckt sich.

5. Mischbatterie nach einer oder mehreren vorhergehenden Ansprüchen, dadurch gekennzeichnet, daß die obengenannte Kupplung (41), um so ein Filterelement (42) einfügen lassen, axial geöffnet ist, wobei das Filterelement (42) von einem Stopfen (43) mit Einschiebung eines Dichtungsring (44) in Stellung gehalten wird.

## Revendications

1. Mélangeur, en particulier pouvant être adapté aux unités conventionelles à deux robinets emboîtés, comprenant un corps (1) de commande extérieure qui peut être assemblé à sections télescopiques (13) ayant raccords à soupape (14) qui peuvent être insérés dans les sièges (25, 25) des robinets emboîtés en avance, ledit corps de commande (1) étant pourvu d'un raccord (10) pour l'écoulement de l'eau, d'une ouverture de raccord (11) pour l'abduction d'eau froide et une ouverture de raccord (12) pour l'abduction d'eau chaude, caractérisé en ce que lesdits raccords à soupape (14) comprennent un élément à soupape (20) qui peut être assemblé scellé aux ouvertures (23 et 24) pour l'abduction de l'eau dans lesdits sièges (25 et 26) et forment une conduite de communication avec lesdites sections télescopiques (13), en ce que lesdites sections télescopiques (13) comprennent de sections tubulaires (15) assemblées auxdits raccords à soupape (14) et pouvant être insérées dans lesdites ouvertures pour raccords (11 et 12) dudit corps de commande (1), un bouchon (16) étant prévu, en outre, serré à vis sur lesdites ouvertures (11, 12) pour raccords et opérant sur un joint d'étanchéité (17) assemblable extérieurement aux extrémités desdites sections tubulaires (15) par interposition d'une rondelle plate (18) et d'un collier de serrage (19), et en ce qu'un élément (2—9) opérant le levier individuel est emboîté dans ledit corps de commande (1).

2. Mélangeur selon la revendication précédente, caractérisé en ce que ledit élément à soupape (20) a, sur l'une de ses extrémités, une garniture frontale (21) opérant sur lesdites ouvertures (23 et 24) d'abduction de l'eau, et sur l'autre extrémité, un siège polygonal (35) qui peut être retenu par un outil pour se serrer contre lesdites ouvertures (23, 24) d'abduction de l'eau.

3. Mélangeur selon une ou plusieurs des revendications précédentes, caractérisé en ce que ledit élément à soupape (20) à une section (30) filétée à l'extérieur, qui peut être retenue par un filetage intérieur défini par un raccord fileté (31) double qui peut être inséré dans lesdits sièges (25, 26) filetés desdits robinets emboîtés préexistants.

4. Mélangeur selon une ou plusieurs des revendications précédentes, caractérisé en ce qu'il comprend un accouplement (41) assemblable à la section extérieure à double filetage dudit raccord à double filetage (31), ladite section tubulaire (15) s'étendant radialement dudit accouplement (41).

5. Mélangeur selon une ou plusieurs des revendications précédentes, caractérisé en ce que ledit accouplement (41) est ouvert axialement pour l'introduction d'un élément-filtre (42) tenu en position par un bouchon (43) avec interposition d'une bague d'étanchéité (44).

Fig. 1

1

Fig. 2